# EUROPÄISCHE PATENTSCHRIFT

(11) **EP 1 029 877 B1**
(45) Veröffentlichungstag und Bekanntmachung des Hinweises auf die Patenterteilung: **07.05.2003**
(21) Anmeldenummer: 00100278.1
(22) Anmeldetag: 19.01.2000
(51) Int. Cl.: C08G 18/40, C08F 283/00, C08F 283/06, C08G 18/50, C08G 18/63

(54) **Verfahren zur Herstellung stabilisierter, feindisperser und niedrigviskoser Polymerpolyole mit hohen Gehalt an Styrol oder Styrol-Copolymerisaten**
Process of manufacture of stabilised, finely dispersed, low viscosity polymer polyols with high content of polystyrene or polystyrene copolymers
Procédé de préparation de polyols polymeres stabilisés, finement dispersés et de faible viscosité possêdant une teneur elevée en polystyrene ou en copolymeres de polystyrene

(30) Priorität: 29.01.1999 DE 19903390
(43) Veröffentlichungstag der Anmeldung: 23.08.2000
(73) Patentinhaber: Bayer Aktiengesellschaft, 51368 Leverkusen (DE)
(72) Erfinder: Lorenz, Klaus, Dr., 41539 Dormagen (DE); Dietrich, Manfred, Dr., 51373 Leverkusen (DE); Brockelt, Michael, 51373 Leverkusen (DE); Scholz, Uwe, Dr., 25524 Itzehoe (DE); Kumpf, Robert-Joseph, Dr., 40489 Düsseldorf (DE); Grönen, Jürgen, Dr., 51491 Overath (DE); Jacobs, Gundolf, Dr., 51503 Rösrath (DE)

(56) Entgegenhaltungen:
- EP-A- 0 308 139
- EP-A- 0 343 788
- EP-A- 0 343 908

## Beschreibung

Die vorliegende Erfindung betrifft neuartig stabilisierte, feindisperse, niedrigviskose Polymerpolyole mit einem hohen Gehalt an Polystyrol oder Polystyrol-Copolymerisaten sowie die Herstellung solcher Polymerpolyole und deren Verwendung zur Herstellung von PU-Werkstoffen, insbesondere Polyurethanschäumen.

Unter Polymerpolyolen sind im Rahmen der Erfindung Produkte zu verstehen, die durch Polymerisation ethylenisch ungesättigter Verbindungen in Polyolen, sogenannten Basispolyolen, erhalten werden können. Als Polyole, die den Polymerpolyolen zugrunde liegen, kommen die üblicherweise in der Polyurethan-Chemie verwendeten Polyole in Betracht, dies sind vor allem die bekannten Polyester- und Polyetherpolyole sowie deren Mischungen untereinander. Wie zuvor erwähnt, können die Polymerpolyole zur Herstellung von Polyurethanschaumstoffen verwendet werden. Die in den Polymerpolyolen enthaltenen Polymere ethylenisch ungesättigter Verbindungen, insbesondere auf Basis von Styrol oder Mischungen von Styrol und Acrylnitril, dienen hauptsächlich zur gezielten Modifikation der physikalischen Eigenschaften der aus den Polymerpolyolen hergestellten Polyurethankunststoffe.

Um zu verhindern, dass die Polymerisate auf Basis der ethylenisch ungesättigen Verbindungen in den sogenannten Basispolyolen sedimentieren oder koagulieren, setzt man den Basispolyolen sogenannte Dispersionsstabilisatoren hinzu. Beispiele für solche Dispersionsstabilisatoren sind die bekannten Makromere oder OH-endgruppenhaltige Prepolymere. Solche Dispersionsstabilisatoren sind beispielsweise beschrieben in US 4 454 255 und 4 689 354 sowie in EP 0 768 324 und US 4 357 430.

Nachteilig beim Einsatz von Makromeren als Stabilisatoren bei der Herstellung von Polymerpolyolen mit einem hohen Gehalt an Polystyrol ist, dass es kaum möglich ist, feindisperse, filtrierbare Produkte zu erhalten. Bei der Verwendung von OH-Gruppen terminierten Prepolymeren als Stabilisatoren für solche Polymerpolyole ergibt sich der Nachteil, dass solche Polymerpolyole vergleichsweise hohe Viskositäten aufweisen.

Ein verbessertes Stabilisatorsystem für polystyrolreiche Polymerpolyole ist beispielsweise in EP 0 495 551 und EP 0 786 480 beschrieben, in denen über mehrfunktionelle Isocyanate gekoppelte Polyetherpolyole als Stabilisatoren eingesetzt werden. Aber auch die in EP 0 495 551 und EP 0 786 480 eingesetzten Stabilisatoren ergeben bei ihrem Einsatz noch keine befriedigenden Viskositäten für Polymerpolyole mit hohem Feststoffgehalt.

Aufgabe der vorliegenden Erfindung ist es nun, verbesserte feindisperse, niedrigviskose und leicht filtrierfähige Polymerpolyole mit einem hohen Gehalt an Styrol oder Styrolcopolymerisaten zur Verfügung zu stellen, die die Nachteile hinsichtlich der Stabilisierung der bisherigen polystyrolreichen Polymerpolyole vermeiden.

Gegenstand der vorliegenden Erfindung sind daher neuartig stabilisierte, feindisperse, niedrigviskose Polymerpolyole, welche bestehen aus
A) einem Polyol,
B) einem Polymerisat aufgebaut aus Styrol oder Styrol und anderen ethylenisch ungesättigten Monomeren,
   sowie
C) einem Mercaptangruppen und/oder Disulfidgruppen enthaltenden Polymer, das mit der Polyolkomponente A) verträglich ist, dessen mittleres Molekulargewicht 500 bis 100 000 beträgt, welches im Mittel mindestens 0,5 Mercaptangruppen oder 1 Disulfidgruppe pro Molekül besitzt und eine Viskosität im Bereich von 100 bis 80 000 mPa·s (gemessen am Polymer bei einer Temperatur von 25°C nach DIN 53 019/Scherrate: 48/s) hat,
wobei die Komponente B) in einer Menge von 30 bis 60 Gew.-Teilen und die Komponente C) in einer Menge von 1 bis 6 Gew.-Teilen, jeweils bezogen auf das Gewicht des fertigen Polymerpolyols, vorhanden sind.

Bevorzugt sind in den erfindungsgemäßen Polymerpolyolen die Komponente B) in einer Menge von 35 bis 55 Gew.-Teilen und die Komponente C) in einer Menge von 2 bis 4 Gew.-Teilen vorhanden.

Als Polyole A) kommen alle Polyole in Frage, die üblicherweise bei der Herstellung von Polyurethanen eingesetzt werden. Dies sind die bekannten Polyetherpolyole und Polyesterpolyole, die sowohl einzeln als auch in beliebigen Mischungen untereinander eingesetzt werden können. Selbstverständlich können als Polyole auch durch mehrere Hydroxygruppen terminierte Polyurethane, mehrere Hydroxygruppen enthaltende Phosphorverbindungen sowie andere, mehrere Hydroxygruppen enthaltenden Verbindungen eingesetzt werden, wie sie beispielsweise in US 4 454 255 näher beschrieben sind.

Vorzugsweise werden Polyetherpolyole sowie Polyesterpolyole eingesetzt, insbesondere Polyetherpolyole.

Als Polyetherpolyole kommen vorzugsweise die in Betracht, die durch eine Additionsreaktion von einer geeigneten, mindestens zwei aktive Wasserstoffatome enthaltenden Starterverbindung an cyclische Ether erhalten werden. Beispiele für solche Polyetherpolyole sind solche, die erhalten werden durch Umsetzung von Ethylenoxid, Propylenoxid, Butylenoxid, Tetrahydrofuran und Mischungen derselben mit mehrfunktionellen Starterverbindungen, wie Alkylenglykole, z.B. Glycerin, Trimethylolpropan, Pentaerythrit, Sorbit, Glukose und Succose. Andere geeignete Starterverbindungen sind z.B. Wasser, Ammoniak, Aminoalkohole, wie Ethanolamin, Diethanolamin, Triethanolamin, und primäre und/oder sekundäre Amine oder Polyamine, wie Ethylendiamin, Anilin und Toluoldiamin. Die erfindungsgemäß einzusetzenden Polyetherpolyole besitzen üblicherweise eine Molmasse von 500 bis 12.000, bevorzugt von 2.000 bis 8.000, und haben eine Hydroxyfunktionalität von 2 bis 6. Ganz besonders bevorzugt werden als Polyetherpolyole eingesetzt solche, die erhalten werden durch Umsetzung von Ethylenoxid und/oder Propylenoxid mit den obengenannten, mehrere Hydroxygruppen enthaltenden Starterverbindungen.

Als Polyesterpolyole, die bei den erfindungsgemäßen Mischungen Verwendung finden, kommen insbesondere solche in Frage, die sich ableiten aus Polycarbonsäuren und Polyalkoholen. Als Polycarbonsäuren können beispielsweie eingesetzt werden Oxalsäure, Malonsäure, Glutarsäure, Adipinsäure, Maleinsäure, Fumarsäure, Isophthalsäure und/oder Terephthalsäure. Als Polyalkohole kommen sowohl aliphatische als auch aromatische Polyalkohole in Frage, wie Ethylenglykol, Propylenglycol, Trimethylenglycol, 1,2-Butandiol, 1,3-Butandiol, 1,4-Butandiol, 1,2-Pentandiol, 1,4-Pentandiol, 1,5-Pentandiol, 1,6-Hexandiol, 1,7-Heptandiol, Glycerin, 1,1,1-Trimethylolpropan, 1,1,1-Trimethylolethan, 1,2,6-Hexantriol, α-Methylglycosit, Pentaerythrol und/oder Sorbit, sowie Polyetherpolyole mit einem Molekulargewicht von 500 bis 6000 und einer Hydroxyfunktionalität von 2 bis 8. Desweiteren können Polyalkohole eingesetzt werden, die von Phenol abgeleitet sind, wie Bisphenol A. Darüber hinaus können als Polyesterpolyole solche eingesetzt werden, die sich von entsprechenden Polyesteramiden ableiten (Umsetzungsprodukte von entsprechenden Aminen oder Aminoalkoholen mit Polycarbonsäuren. Wir verweisen in diesem Zusammenhang auf US 4 454 255). Ferner können auch hydroxygruppenhaltige Polycarbonate eingesetzt werden.

Bevorzugt werden als Polyesterpolyole eingesetzt die Umsetzungsprodukte aus den obengenannten Polycarbonsäuren mit den Polyetherpolyolen und/oder den niedermolekularen Polyolen im geeigneten Mengenverhältnis. Die einzusetzenden Polyesterpolyole besitzen eine mittlere Molmasse die im wesentlichen der mittleren Molmasse der vorgenannten Polyetherpolyole entspricht. Dies gilt auch für die Hydroxyfunktionalität.

Als Komponente B) der erfindungsgemäßen Polymerpolyole kommen solche Polymerisate in Betracht, die aufgebaut sind aus Styrol oder aus Styrol und anderen ethylenisch ungesättigten Monomeren. Bevorzugt sind solche ethylenisch ungesättigten Monomere, die mit Styrol copolymerisierbar sind. Solche ethylenisch ungesättigten mit Styrol polymerisationsfähigen Monomere können alle Verbindungen sein, welche radikalisch polymerisierbare Doppelbindungen enthalten, beispielsweise Butadien, α-Methylstyrol, Methylstyrol-Isomere, Ethylstyrol-Isomere, Acrylnitril, Methacrylnitril, Methacrylsäureester, wie Methylmethacrylat, Acrylsäurealkylester und aliphatische oder aromatische Di(meth)acrylate sowie oligomere Butadiene und Derivate der Maleinsäure, wie Maleimide. Selbstverständlich kann die Polymerisation von Styrol mit zwei unterschiedlichen Co-Monomeren durchgeführt werden, so dass entsprechende Terpolymerisate entstehen. Bevorzugt ist jedoch der Einsatz von Polystyrol als Komponente B sowie von Copolymerisaten von Styrol und Acrylnitril als Komponente B, wobei die Menge an Acrylnitril im Copolymerisat 60 bis 0,5 Gew.-% beträgt. Ganz besonders bevorzugt wird als Komponente B) Polystyrol alleine eingesetzt.

Als Komponente C) (auch als Stabilisator bezeichnet) kommen - wie erwähnt - Mercaptangruppen und/oder Disulfidgruppen enthaltende Polymere in Betracht, die mit der Polyolkomponente A) verträglich sind. Bevorzugt beträgt das mittlere Molekulargewicht 1000 bis 80 000.

Als verträglich mit der Komponente A) wird die Komponente C) bezeichnet, wenn die Komponente C) mit der Komponente A) eine im wesentlichen homogene Mischung bildet.

Bevorzugt enthält die Komponente C) im Mittel 0,5 bis 30 Mercaptangruppen im Polymermolekül, insbesondere 1 bis 8 Mercaptangruppen oder 1 bis 15, bevorzugt 2 bis 4 Disulfidgruppen. Diese Angaben gelten für den Fall, dass Komponente C) nur Mercaptangruppen oder nur Disulfidgruppen im Polymermolekül enthält.

Wie erwähnt sind als Komponente C) alle Polymere geeignet, die Mercaptangruppen oder Disulfidgruppen enthalten und mit der Polyolkomponente A) verträglich sind. Als solche der Komponente C zugrundeliegende Polymere sind beispielsweise zu nennen Polyetherpolyole (PE), Polyesterpolyole (PES) und/oder Polyurethanpolyole.

Bevorzugt werden eingesetzt als Komponente C) Mercaptangruppen enthaltende Polyetherpolyole, Polyesterpolyole und/oder Polyurethane, die eine OH-Zahl von 5 bis 150, bevorzugt 10 bis 100, besitzen und die die zuvor erwähnte Anzahl an Mercaptangruppen im Molekül besitzen.

Bei den Polyetherpolyolen und Polyesterpolyolen sind die Mercaptangruppen über Ether- oder Estergruppierungen an die Polyetherpolyole bzw. Polyesterpolyole gebunden. Bei den Polyurethanen sind die Mercaptangruppen über Carbamatgruppierungen an das Polyurethan gebunden.

Ganz besonders bevorzugt werden solche Polyetherpolyole und Polyesterpolyole als Komponente C) eingesetzt, die über Estergruppierungen gebundene Mercaptangruppen der Formel (I) 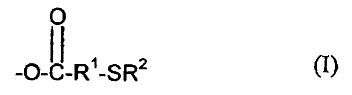 enthalten, worin
- R¹: ein geradkettiges, verzweigtes oder cyclisches Alkylendiradikal mit 1 bis 20 Kohlenstoffatomen, bevorzugt 1 bis 10 Kohlenstoffatomen, bedeutet,
und
- R²: für Wasserstoff steht.

Der Rest R¹ kann selbstverständlich ein oder mehrfach mit solchen Substituenten substituiert sein, die die Kompatibilität der Komponente C) mit der Komponente A) nicht beeinträchtigen. Als Beispiele werden Alkoxyreste mit 1 bis 4 Kohlenstoffatomen, Polyoxy-C₁ bis C₄-alkylenreste und Halogenatome genannt.

Als Mercaptangruppen enthaltende Polyurethane kommen insbesondere solche in Betracht, deren Mercaptangruppen über einer Carbamatgruppierung an das Polyurethan gebunden ist, wobei das über einer Carbamatgruppierung gebundene Mercaptan der Formel (II) entspricht 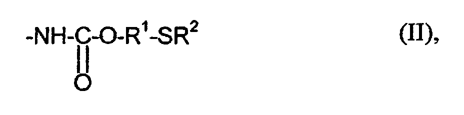 in der
R¹ und R² die zuvor genannte Bedeutung besitzen.

Als die der Komponente C) zugrundeliegenden Polyetherpolyole und Polyesterpolyole können die für die Komponente A) erwähnten Polyetherpolyole und Polyesterpolyole eingesetzt werden.

Die Mercaptangruppen enthaltenden Polyetherpolyole und Polyesterpolyole können beispielsweise erhalten werden durch Umsetzung der genannten Polyetherpolyole bzw. Polyesterpolyole mit entsprechenden Mercaptanen, wie Mercaptoessigsäure oder Mercaptopropionsäure.

Beschrieben sind solche Umsetzungen beispielsweise in JP 09 124 738-A und JP 05 320 231-A.

Selbstverständlich ist es auch möglich, die die Mercaptangruppen enthaltenden Polyetherpolyole bzw. Polyesterpolyole herzustellen durch Umsetzung entsprechender Aufbaukomponenten der Polyetherpolyole bzw. Polyesterpolyole mit entsprechenden Mercaptanen in situ.

Die Mercaptangruppen enthaltenden Polyurethane sind Reaktionsprodukte aus einem Polyether- bzw. Polyesterpolyol, einem Polyisocyanat und einem hydroxygruppenhaltigen Mercaptan, beispielsweise Mercaptoethanol. Die Herstellung solcher Produkte ist beispielsweise beschrieben von D. Dieterich in Houben-Weyl, Methoden der organischen Chemie, Band E20, Seite 1658 (Georg Thieme Verlag, Stuttgart, New York 1987).

Wie erwähnt, besitzen die erfindungsgemäßen Polymerpolyole eine feindisperse, niedrigviskose Beschaffenheit. Die Viskosität der erfindungsgemäßen Polymerpolyole liegen im Bereich von 2500 bis 15 000, bevorzugt 2500 bis 10 000 mPa·s, insbesondere 2500 bis 6500 mPa·s, gemessen am Polymerpolyol bei einer Temperatur von 25°C (nach DIN 53 019/Scherrate: 48/s).

Ein weiterer Gegenstand der vorliegenden Erfindung ist ein Verfahren zur Herstellung der erfindungsgemäßen stabilisierten, feindispersen, niedrigviskosen Polymerpolyole.

Eine bevorzugte Möglichkeit der Herstellung der erfindungsgemäßen Polymerpolyole besteht darin, dass man die Polymerisation des Styrols oder des Styrols mit anderen ethylenisch ungesättigten Monomeren, die mit Styrol copolymerisierbar sind, in Gegenwart der erfindungsgemäß einzusetzenden Polyole (Komponente A) -auch Basispolyol genannt -, und in Gegenwart von Mercaptangruppen und/oder Disulfidgruppen enthaltenden Polymeren (Komponente C)) sowie in Anwesenheit einer wirksamen Menge eines radikalbildenden Initiators durchführt, wobei die Komponente C) in einer Menge von 1 bis 6 Gew.-Teilen und das die Komponente B) aufbauende Styrol gegebenenfalls mit den mit Styrol co-polymerisierbaren ethylenisch ungesättigten Monomeren in einer solchen Menge verwendet werden, dass die Komponente B) in einer Menge von 30 bis 60 Gew.-Teilen im fertigen Polymerpolyol vorhanden ist.

Die Polymerisation von Styrol oder von Styrol mit anderen ethylenisch ungesättigten Monomeren, die mit Styrol copolymerisierbar sind, findet, wie erwähnt, in Gegenwart der Komponente A), dem Polyol, und in Gegenwart der Komponente C), dem Mercaptangruppen und/oder Disulfidgruppen enthaltenden Polymer statt, bei Temperaturen von ca. 60°C bis 140°C, vorzugsweise 80 bis 100°C. Die Drücke können dabei 1 bis 10 bar betragen.

Es ist ebenfalls möglich, die Polymerisation von Styrol oder von Styrol mit anderen ethylenisch ungesättigten Monomeren ausser in Gegenwart der Komponente A), dem Polyol, und in Gegenwart der Komponente C), dem Mercaptogruppen und/oder Disulfidgruppen enthaltenden Polymer, zusätzlich in Gegenwart einer geringen Menge, beispielsweise 2 bis 8 Gew.-%, bezogen auf das Gewicht des fertigen Polymerpolyols, eines vorher separat hergestellten Polymerpolyols durchzuführen (sogenanntes Saat-Polymerisations-Verfahren).

Die Polymerisation wird in Gegenwart eines Lösungsmittels durchgeführt, wobei der Anteil des Lösungsmittels bis zu 20 Gew.-%, bezogen auf die gesamte Menge des fertigen Polymerpolyols, beträgt. Es wird in Gegenwart von polaren Lösungsmitteln polymerisiert, beispielsweise in Gegenwart von niederen mono- oder oligofunktionellen Alkoholen, wie Methanol, Ethanol, n-Propanol, Isopropanol, n-Butanol, 2-Butanol, Ethylenglykol und/oder Amylalkohol. Denkbar ist ebenfalls der Einsatz von Lösungsmittelgemischen, welche beispielsweise durch Zugabe von Toluol, Ethylbenzol oder anderen aromatischen oder aliphatischen Lösungsmitteln zu den Alkoholen erhalten werden. Das Lösungsmittel oder das Lösungsmittelgemisch kann dem Reaktionsgemisch während der Polymerisation ganz oder teilweise zugegeben werden.

Desweiteren können bei der Polymerisation niedermolekulare Verbindungen zur Kontrolle des Molekulargewichtes des Polymerisates zugesetzt werden. Beispiele für solche Verbindungen sind Dodecanthiol, tert-Dodecylmercaptan, 2-Thioethanol, Thioglycerin und halogenierte Verbindungen, wie beispielsweise Tetrachlorkohlenstoff.

Üblicherweise wird der radikalbildende Initiator in Mengen von ca. 0,3 bis 1,5 Mol-%, bezogen auf die zum Aufbau der Komponente B) eingesetzte Monomermenge, eingesetzt.

Als radikalbildende Initiatoren kommen beispielsweise organische (Hydro-)peroxide in Betracht, wie Dibenzoylperoxid, tert.-Butylperoctoat, tert.-Amylperoxy-2-ethylhexanoat, sowie Azoverbindungen, z.B. Azoisobutyronitril und 2,2'-Azobis-(2-methylbutyronitril).

Bei dem erfindungsgemäßen Verfahren ist es selbstverständlich möglich, den Initiator entweder vorzulegen oder diesen während der Polymerisation teilweise oder in der gesamten Menge zuzudosieren.

Den erfindungsgemäßen Polymerpolyolen können selbstverständlich noch weitere, in der Polyurethanchemie bekannte Additive zugesetzt werden, die für das Eigenschaftsbild der aus den Polymerpolyolen herzustellenden Polyurethanformkörper, insbesondere Schäumen, von Bedeutung sind.

Beispielsweise ist es möglich, die erfindungsgemäßen Polymerpolyole mit Flammschutzmitteln, Antioxidantien, Katalysatoren, Vernetzern und Kettenverlängerern, Inhibitoren, Tensiden und Emulgatoren sowie Schaumstabilisatoren, Zellreglern und Treibmitteln in den üblichen Mengen zu kombinieren. Solche Hilfs- und Zusatzstoffe sind beispielsweise beschrieben in Kunststoff-Handbuch, Polyurethane, 3. neubearbeitete Auflage, Band VII, Carl-Hanser-Verlag, München, Wien. Es ist leicht möglich, die günstigste Menge an Hilfs- und Zusatzstoffen durch geeignete Vorversuche zu ermitteln.

Die erfindungsgemäßen Polymerpolyole eignen sich bevorzugt für die Herstellung vom Polyurethanwerkstoffen, insbesondere von Polyurethanschäumen, die wiederum Verwendung finden z.B. in der Auto- und Möbelindustrie.

Die Polyurethanschäume können in üblicher Art und Weise aus den erfindungsgemäßen Polymerpolyolen hergestellt werden durch Umsetzung mit organischen Polyisocyanaten in Gegenwart von geeigneten Treibmitteln und, wie bereits erwähnt, in Gegenwart von bekannten Hilfs- und Zusatzstoffen. Insbesondere kann der Feststoffgehalt der Polymerpolyolkomponente durch Beimischen von beliebigen Polyolen den Erfordernissen angepasst werden. Als organische Polyisocyanate kommen alle geeigneten aromatischen, aliphatischen und cycloaliphatischen Isocyanate bzw. deren Mischungen und/oder chemischen Modifizierungen dieser Isocyanate in Frage.

Als Treibmittel für die Herstellung von Polyurethanschäumen eignen sich wiederum die bekannten Treibmittel, beispielsweise Wasser, niedrigsiedende Kohlenwasserstoffe, wie Butane, Pentane, Hexane, Heptane, Pentene und/oder Heptene, einschließlich deren Cycloverbindungen, Azoverbindungen, halogenierte Kohlenwasserstoffe, wie Dichlordifluormethan, Trichlorfluormethan, Dichlordifluorethan, Vinylchlorid und/oder Methylenchlorid sowie Kohlendioxid und Addukte aus tertiären Aminen und CO₂. In diesem Zusammenhang verweisen wir auf DE 19 702 208 und US 4 454 255, wo die Herstellung von Polyurethanschäumen näher beschrieben wird.

### Beispiele

### Ausgangsprodukte:

### Polyol A:

Polyetherpolyol der Molmasse 11 800 auf Basis Sorbitol, hergestellt durch Addition von Propylenoxid (82 %) und Ethylenoxid (18 %), OH-Zahl 28,5.

### Polyol B:

Polyetherpolyol der Molmasse 4 950 auf Basis Glycerin, hergestellt durch Addition von Propylenoxid (83 %) und Ethylenoxid (17 %), OH-Zahl 34.

### Polyol C:

Polyetherpolyol der Molmasse 3 250 auf Basis Glycerin, hergestellt durch Addition von Propylenoxid (90 %) und Ethylenoxid (10 %), OH-Zahl 52.

Mercaptoessigsäure: Kommerziell von Merck erhältliches Produkt (Reinheit >98 %). Initiatoren: VAZO 67® (2,2'-Azobis(2-methylbutyronitril), kommerziell von DuPont erhältliches Produkt; Luperox 575® (Tert.-Amylperoxy-2-ethylhexanoat), kommerziell von Elf Atochem erhältliches Produkt.

### Filtrationstest (Filterbeurteilung):

Nach Abkühlen auf etwa 100°C - wie nachstehend in den Beispielen beschrieben - wird das Produkt über ein auf einer Siebplatte liegendes Sieb der Maschenweite 100 µm abgelassen. Soweit nicht anders angegeben, wird hierbei kein Druck angelegt. Man beurteilt den Anteil an Grobteilchen im Polymerpolyol nach der Menge des vom Filtertuch zurückgehaltenen Feststoffs: "1" = minimale Feststoffmengen, "2" = geringe Feststoffmengen, "3" = etwas höhere Feststoffmenge, Lochmuster der Siebplatte auf dem Filtertuch gerade erkennbar, "4" = noch etwas höhere Feststoffmenge, Lochmuster der Siebplatte auf dem Filtertuch deutlich erkennbar.

### Beispiel 1

### Herstellung eines Stabilisators (Komponente C)

2 200 g Polyol A, 21,45 g Mercaptoessigsäure, 660 g Toluol und 1,42 g 85 %ige p-Toluolsulfonsäure werden vorgelegt. Durch die Lösung wird ½ h Stickstoff geleitet. Man erhitzt 7 h am Wasserabscheider auf 139°C bis 141°C und entfernt sodann das Toluol durch Anlegen von Vakuum und Erhitzen auf 110°C. Viskosität: 2 618 mPas (25°C, Scherrate 48/s). OH-Zahl: 28,6 mg KOH/g; Säurezahl: 1,43 mg KOH/g.

### Beispiel 2

### Herstellung eines Stabilisators (Komponente C)

2 700 g Polyol A, 12,64 g Mercaptoessigsäure, 650 g Toluol und 1,12 g 85 %ige p-Toluolsulfonsäure werden vorgelegt. Durch die Lösung wird ½ h Stickstoff geleitet. Man erhitzt 6 h am Wasserabscheider auf 140°C bis 141°C und entfernt sodann das Toluol durch Anlegen von Vakuum und Erhitzen auf 110°C. Viskosität: 1 690 mPas (25°C, Scherrate 48/s). OH-Zahl: 28,2 mg KOH/g; Säurezahl: 1,05 mg KOH/g.

### Beispiel 3

### Herstellung eines Stabilisators (Komponente C)

2 200 g Polyol A, 21,45 g Mercaptoessigsäure, 6,81 g Adipinsäure, 650 g Toluol und 1,98 g 85 %ige p-Toluolsulfonsäure werden vorgelegt. Durch die Lösung wird ½ h lang Stickstoff geleitet. Man erhitzt für 13 h am Wasserabscheider auf 139 bis 141°C und entfernt sodann das Toluol durch Anlegen von Vakuum und Erhitzen auf 110°C. Viskosität: 2990 mPa.s (25°C, Scherrate: 48/s); OH-Zahl: 26,5 mg KOH/g; Säurezahl: 1,05 mg KOH/g.

### Beispiel 4

### Herstellung eines Polymerpolyols (reines Polystyrol als disperse Phase, berechneter Gewichtsanteil: 37 Gew.-Teile, bezogen auf das Gewicht des fertigen Polymerpolyols).

Es werden 506,7 g Polyol B, 20 g des Stabilisators aus Beispiel 2, 300 g Ethanol, 80 g Styrol und 0,6 g VAZO 67 vorgelegt. Durch die Lösung wird ½ h lang Stickstoff geleitet. Man erhitzt die Vorlage auf die Reaktionstemperatur von 83°C bis 88°C und lässt für 20 min. reagieren. Bei dieser Temperatur werden sodann 538 g Polyol B, 75,8 g des Stabilisators aus Beispiel 2, 5,4 g VAZO 67® und 660 g Styrol über einen Zeitraum von 2 h zudosiert. Man dosiert danach über einen Zeitraum von 1 h 100 g Polyol B, 13,5 g des Stabilisators aus Beispiel 2 und 50 g Ethanol zu. Man lässt 2 h nachreagieren und entfernt sodann Lösungsmittel und Restmonomere bei 115°C im Vakuum. Danach wird das erhaltene Produkt auf 100°C abgekühlt und wie vorstehend beschrieben einem Filtrationstest unterzogen. Diese Prozedur für die Filtertuchbeurteilung wird auch bei den nachstehend aufgeführten Beispielen durchgeführt. Umsatz Styrol: 98 %, Filtertuchbeurteilung: 1, Viskosität (25°C, Scherrate 48/s): 5 830 mPas.

### Beispiel 5

### Herstellung eines Polymerpolyols (reines Polystyrol als disperse Phase, berechneter Gewichtsanteil: 37 Gew.-Teile).

Es werden 1 013,5 g Polyol B, 22,2 g des Stabilisators aus Beispiel 1, 250 g Ethanol und 740 g Styrol vorgelegt, wobei vor der Zugabe von Styrol ½ h lang Stickstoff bei Raumtemperatur durch die Lösung geleitet wird. Man erhitzt die Vorlage auf die Reaktionstemperatur von 83°C bis 88°C und dosiert sodann 150 g Polyol B, 13,3 g des Stabilisators aus Beispiel 1, 50 g Ethanol und 6,6 g VAZO 67® über einen Zeitraum von 90 min. zu. Daran anschließend werden 50 g Polyol B, 4,4 g des Stabilisators aus Beispiel 1 und 50 g Ethanol über einen Zeitraum von 40 min. zudosiert. Man lässt 20 min. nachreagieren und entfernt sodann Lösungsmittel und Restmonomere bei 115°C im Vakuum. Umsatz Styrol: 94 %, Filterbeurteilung: 1, Viskosität (25°C, Scherrate 48/s): 4 960 mPas.

### Beispiel 6

### Herstellung eines Polymerpolyols (disperse Phase: Poly(Styrol-co-Acrylnitril) im Gewichtsverhältnis Styrol/Acrylnitril= 60/40, berechneter Gewichtsanteil: 37 Gew.-Teile).

Es werden 944 g Polyol B, 15,3 g des Stabilisators aus Beispiel 1, 250 g Ethanol, 48 g Styrol und 32 g Acrylnitril vorgelegt. Man erhitzt die Vorlage auf die Reaktionstemperatur von 83°C bis 88°C und dosiert sodann 150 g Polyol B, 76 g des Stabilisators aus Beispiel 1, 50 g Ethanol, 6,6 g VAZO 67®, 264 g Acrylnitril und 396 g Styrol über einen Zeitraum von 2 h zu. Daran anschließend werden 50 g Polyol B, 18 g des Stabilisators aus Beispiel 1 und 50g Ethanol über einen Zeitraum von 60 min. zudosiert. Man lässt 120 min. nachreagieren und entfernt sodann Lösungsmittel und Restmonomere bei 115°C im Vakuum. Umsatz Monomere: 97,2 %, Filterbeurteilung: 2, Viskosität (25°C, Scherrate 48/s): 5 490 mPas.

### Beispiel 7

### Herstellung eines Polymerpolyols (reines Polystyrol als disperse Phase, berechneter Gewichtsanteil: 41 Gew.-Teile).

Es werden 935,2 g Polyol C, 22,2 g des Stabilisators aus Beispiel 1, 63 g Ethanol und 817,6 g Styrol vorgelegt, wobei vor der Zugabe von Styrol durch die Lösung ½ h lang Stickstoff bei Raumtemperatur geleitet wird. Man erhitzt die Vorlage auf 88°C bis 89°C und dosiert sodann 150 g Polyol C, 13,3 g des Stabilisators aus Beispiel 1, 13 g Ethanol und 7,2 g VAZO 67® über einen Zeitraum von 100 min. zu. Daran anschließend werden 50 g Polyol C, 4,4 g des Stabilisators aus Beispiel 1 und 13 g Ethanol über einen Zeitraum von 40 min. zudosiert. Man lässt 60 min. nachreagieren und entfernt sodann Lösungsmittel und nicht umgesetztes Styrol bei 115°C im Vakuum. Umsatz Styrol: 97 %, Filterbeurteilung: 2, Viskosität (25°C, Scherrate 48/s): 5450 mPas.

### Beispiel 8

### Herstellung eines Polymerpolyols (reines Polystyrol als disperse Phase, berechneter Gewichtsanteil: 37 Gew.-Teile).

Es werden 912,2 g Polyol B, 22,2 g des Stabilisators aus Beispiel 1, 200 g Ethanol und 740 g Styrol vorgelegt, wobei vor der Zugabe von Styrol durch die Lösung ½ h lang Stickstoff bei Raumtemperatur geleitet wird. Man erhitzt die Vorlage auf 88°C bis 90°C und dosiert sodann 250 g Polyol B, 13,3 g des Stabilisators aus Beispiel 1, 50 g Ethanol und 7,9 g Luperox 575® über einen Zeitraum von 90 min. zu. Daran anschließend werden 50 g Polyol B, 4,4 g des Stabilisators aus Beispiel 1 und 50 g Ethanol über einen Zeitraum von 40 min. zudosiert. Man lässt anschließend 60 min. bei 88°C bis 90°C nachreagieren und entfernt danach das Lösungsmitel sowie nicht umgesetztes Styrol bei 115°C im Vakuum. Umsatz Styrol: 96,2 %, Filterbeurteilung: 1, Viskosität (25°C, Scherrate 48/s): 12 390 mPas.

### Beispiel 9

### Herstellung eines Polymerpolyols (Polystyrol-2-Ethylhexylacrylat-Copolymerisat als disperse Phase, berechneter Gewichtsanteil: 37 Gew.-Teile).

Es werden 1013,4 g Polyol B, 22,2 g des Stabilisators aus Beispiel 1, 250 g Ethanol, 703 g Styrol und 31 g 2-Ethylhexylacrylat vorgelegt, wobei vor der Zugabe von Styrol durch die Lösung ½ h lang Stickstoff bei Raumtemperatur geleitet wird. Man erhitzt die Vorlage auf 88°C bis 90°C und dosiert sodann 150 g Polyol B, 13,3 g des Stabilisators aus Beispiel 1, 50 g Ethanol, 6 g 2-Ethylhexylacrylat und 6,6 g VAZO 67® über einen Zeitraum von 100 min. zu. Daran anschließend werden 50 g Polyol B, 4,4 g des Stabilisators aus Beispiel 1 und 50 g Ethanol über einen Zeitraum von 40 min. zudosiert. Man lässt 60 min. bei 90°C nachreagieren und entfernt sodann Lösungsmittel und Restmonomere bei 115°C im Vakuum. Umsatz Monomere: 96 %, Filterbeurteilung: 1, Viskosität (25°C, Scherrate 48/s): 5500 mPas.

### Beispiel 10

### Herstellung eines Polymerpolyols (Polystyrol-Hexandioldiacrylat-Copolymerisat als disperse Phase, berechneter Gewichtsanteil: 37 Gew.-Teile).

Es werden 1003,5 g Polyol B, 6,9 g des Stabilisators aus Beispiel 1, 250 g Ethanol, 322 g Styrol, 1 g Hexandioldiacrylat und 1,7 g VAZO 67® vorgelegt, wobei vor der Zugabe von Styrol durch die Vorlage ½ h lang Stickstoff bei Raumtemperatur geleitet wird. Man erhitzt die Vorlage auf 88°C bis 90°C und hält sie bei dieser Temperatur für 40 min. Es werden sodann 417,4 g Styrol und 15,6 g des Stabilisators aus Beispiel 1 hinzugegeben. Bei der Reaktionstemperatur von 88°C bis 90°C werden nun 150 g Polyol B, 16,6 g des Stabilisators aus Beispiel 2, 50 g Ethanol und 5,4 g VAZO 67® über einem Zeitraum von 70 min. zugegeben. Man dosiert danach 50 g Polyol B, 5,5 g des Stabilisators aus Beispiel 1 und 50 g Ethanol über einen Zeitraum von 40 min. und lässt 60 min. bei 88°C bis 90°C nachreagieren. Lösungsmittel und Restmonomere werden bei 115°C im Vakuum entfernt. Umsatz Monomere: 96,5 %, Filterbeurteilung: 1, Viskosität (25°C, Scherrate: 48/s): 5640 mPas.

### Beispiel 11

### Herstellung eines Polymerpolyols (reines Polystyrol als disperse Phase, berechneter Gewichtsanteil: 37 Gew.-Teile).

Es werden 1013,5 g Polyol B, 22,2 g des Stabilisators aus Beispiel 3, 250 g Ethanol und 740 g Styrol vorgelegt, wobei vor der Zugabe von Styrol durch Vorlage ½ h lang Stickstoff bei Raumtemperatur geleitet wird. Man erhitzt die Vorlage auf 88°C bis 90°C und dosiert sodann 150 g Polyol B, 13,3 g des Stabilisators aus Beispiel 3, 50 g Ethanol und 6,6 g VAZO 67® über einen Zeitraum von 90 min. zu. Man dosiert danach 50 g Polyol B, 4,4 g des Stabilisators aus Beispiel 3 und 50 g Ethanol über einen Zeitraum von 40 min. zu und lässt 60 min. bei 88°C bis 90°C nachreagieren. Lösungsmittel und Restmonomere werden bei 115°C im Vakuum entfernt. Umsatz Styrol: 98,0 %, Filterbeurteilung: 1, Viskosität (25°C, Scherrate 48/s): 6000 mPas.

### Beispiel 12

### Herstellung eines Polyurethan-Weichformschaumkörpers

Zu 113,5 g Polymerpolyol aus Beispiel 11 werden 96,5 g eines glyceringestarteten Polyethers (17,7 % Ethylenoxidgehalt, 82,3 % Propylenoxidgehalt, OHZ: 28), 6,72 g Wasser, 0,21 g Bis-2-(dimethylamino)-ethylether, 0,53 g Triethylendiamin, 2,10 g einer 80 %igen Lösung von Diisopropanolamin in Wasser, 2,10 g Schaumstabilisator B 8701 (Copolymer aus Polydimethylsiloxan und Polyether) und 2,52 g Diethanolamin gegeben. Diese Mischung wird 30 sec. mit ca. 4.200 Upm gerührt. Zu dieser Mischung gibt man nun 87,30 g Desmodur T 80, verrührt 7 sec. bei ebenfalls 4.200 Upm, gießt das Reaktionsgemisch anschließend in eine auf 50°C vorgeheizte Form (Volumen ca. 3 900 cm³) und verschließt sie mit Hilfe einer Presse. Man belässt bei Raumtemperatur genau 8 min., danach wird der Schaumstoffkörper entformt, geschlossene Zellen werden mechanisch geöffnet.

Nach 24-stündiger Lagerung bei Raumtemperatur werden an Prüfkörpern (Dichte: 46,4 kg/m³) folgende physikalische Daten gemessen:

| | |
|---|---|
| Stauchhärte (40 % Kompression) | 9,0 kPa |
| Zugfestigkeit | 200 kPa |
| Bruchdehnung | 90 % |

## Patentansprüche

1. Verfahren zur Herstellung feindisperser, niedrig viskoser Polymerpolyole durch Polymerisation von (B) Styrol oder einer Mischung aus Styrol und mindestens einem weiteren ethylenisch ungesättigten Monomeren, das mit Styrol copolymerisierbar ist, in Gegenwart eines Polyols (A) sowie in Gegenwart eines Mercaptangruppen und/oder Disulfidgruppen enthaltenden Polymers (C), das verträglich mit der Komponente (A) ist, ein zahlenmittleres Molekulargewicht von 500 bis 100000, im Durchschnitt 0,5 Mercaptangruppen oder 1 Disulfidgruppe pro Molekül und eine Viskosität von 100 bis 80000 mPa·s (gemessen am Polymer mit einer Temperatur von 25°C nach DIN 53019/Scherrate: 48/s) aufweist, sowie in Gegenwart einer wirksamen Menge eines radikalbildenden Initiators und eines polaren Lösungsmittels, wobei Komponente (C) in einer Menge von 1 bis 6 Gew.-% und die Komponente (A) in einer Menge von 30 bis 60 Gew.-% eingesetzt wird, wobei sich die vorstehend genannten prozentualen Angaben auf die gesamt eingesetzte Menge der Komponenten (A), (B) und (C) beziehen.

2. Ein Verfahren nach Anspruch 1 **dadurch gekennzeichnet, dass** das polare Lösungsmittel Methanol, Ethanol, 1-Propanol, 2-Propanol, 1-Butanol, 2-Butanol, 1-Pentanol oder Ethylenglycol ist.

3. Verwendung der Polymerpolyole nach Anspruch 1 zur Herstellung von Polyurethanwerkstoffen, insbesondere Polyurethanschäumen.

## Claims

1. Process for the preparation of finely disperse, low-viscosity polymer polyols by polymerization of (B) styrene or a mixture of styrene and at least one further ethylenically unsaturated monomer which can be copolymerized with styrene, in the presence of a polyol (A) and in the presence of a polymer (C) which contains mercaptan groups and/or disulfide groups, is compatible with component (A) and has a number-average molecular weight of 500 to 100,000, on average 0.5 mercaptan group or 1 disulfide group per molecule and a viscosity of 100 to 80,000 mPa·s (measured on the polymer with a temperature of 25°C in accordance with DIN 53019/shear rate: 48/s), and in the presence of an active amount of an initiator which forms free radicals and a polar solvent, component (C) being employed in an amount of 1 to 6 wt.% and component (A) being employed in an amount of 30 to 60 wt.%, wherein the abovementioned percentage data relate to the total amount of components (A), (B) and (C) employed.

2. A process according to claim 1, **characterized in that** the polar solvent is methanol, ethanol, 1-propanol, 2-propanol, 1-butanol, 2-butanol, 1-pentanol or ethylene glycol.

3. Use of the polymer polyols according to claim 1 for the preparation of polyurethane materials, in particular polyurethane foams.

## Revendications

1. Procédé de préparation de polyols polymères finement dispersés, de faible viscosité, par polymérisation de (B) styrène ou d'un mélange de styrène et d'au moins un autre monomère éthyléniquement insaturé, qui est copolymérisable avec le styrène, en présence d'un polyol (A), ainsi qu'en présence d'un polymère (C) contenant des radicaux mercaptan et/ou des radicaux disulfure, qui est compatible avec le composant (A), qui présente un poids moléculaire moyen en nombre de 500 à 100 000, en moyenne 0,5 radical mercaptan ou 1 radical disulfure par molécule et une viscosité de 100 à 80 000 mPa.s (mesurée sur le polymère à une température de 25°C selon DIN 53019/taux de cisaillement : 48/seconde), ainsi qu'en présence d'une quantité active d'un initiateur formant radicaux et d'un solvant polaire, où le composant (C) est mis en oeuvre en une quantité allant de 1 à 6% en poids et le composant (A) en une quantité de 30 à 60% en poids, où les données en pourcentage indiquées précédemment se rapportent à la quantité mise en oeuvre des composants (A), (B) et (C) au total.

2. Procédé suivant la revendication 1, **caractérisé en ce que** le solvant polaire est le méthanol, l'éthanol, le 1-propanol, le 2-propanol, le 1-butanol, le 2-butanol, le 1-pentanol ou l'éthylèneglycol.

3. Utilisation des polyols polymères suivant la revendication 1 pour la préparation de pièces en polyuréthanne, en particulier de mousses de polyuréthanne.
